# EUROPÄISCHE PATENTSCHRIFT

(11) **EP 2 735 374 B1**
(45) Veröffentlichungstag und Bekanntmachung des Hinweises auf die Patenterteilung: **18.10.2017**
(21) Anmeldenummer: 13194638.6
(22) Anmeldetag: 27.11.2013
(51) Int. Cl.: B05B 13/02, B60B 30/08, B25H 1/00

(54) **Haltevorrichtung für wenigstens einen felgenartigen Körper**
Stand for at least one rim.
Dispositif de maintient pour au moins une jante.

(30) Priorität: 27.11.2012 DE 202012104604 U
(43) Veröffentlichungstag der Anmeldung: 28.05.2014
(73) Patentinhaber: Strugar, Waldemar, 46240 Bottrop (DE)
(72) Erfinder: Strugar, Waldemar, 46240 Bottrop (DE)
(74) Vertreter: Ring & Weisbrodt

(56) Entgegenhaltungen:
- DE-A1- 19 738 820
- DE-A1-102009 056 505
- GB-A- 2 329 613
- US-A1- 2010 086 695

## Beschreibung

Die vorliegende Erfindung betrifft eine Haltevorrichtung für wenigstens einen felgenartigen Körper zur Oberflächenbearbeitung des wenigstens einen felgenartigen Körpers, insbesondere zum Lackieren mittels einer Sprühvorrichtung bzw. eines Sprühwerkzeugs. Aus den Dokumenten DE102009056505, DE19738820, WO2009015920 sind Haltevorrichtungen zur Oberflächenbearbeitung von Felgen bekannt. Aus dem Stand der Technik sind Vorrichtungen mit einem Standgestell und wenigstens einer Aufnahme für wenigstens eine Felge bekannt. Die Aufnahme ist kegelförmig ausgebildet, so dass eine Felge von oben auf diese kegelförmige Aufnahme gelegt werden kann. Nachteilig an derartigen kegelförmigen Aufnahmen ist, dass kein sicherer Halt der Felge gewährleistet werden kann. Insbesondere bei Felgen mit einem großen Durchmesser kann dies zu Stabilitätsproblemen führen und es kann zu einem Runterfallen der Felge kommen. Dabei kann die Felge stark beschädigt werden, so dass diese eventuell nicht mehr verwendet werden kann. Ferner sind die aus dem Stand der Technik bekannten kegelförmigen Aufnahmen nur horizontal beweglich. Eine leichte Verdrehung der Felge entlang einer Drehachse ist nicht möglich, da eine Fixierbarkeit der Felge nicht gegeben ist. Durch die fehlende Möglichkeit der Fixierung der Felge an der Halterung ist es insbesondere schwierig, einen gleichmäßigen Farbauftrag zu gewährleisten. Dies ist insbesondere an schwer zugänglichen Stellen, wie beispielsweise der Innenkante der Felge zum Reifen hin, nachteilig, da es bei einer ungleichmäßigen Lackierung zu einem Luftaustritt an einem Reifen kommen kann.

Des Weiteren kann eine Felge jeweils nur auf einer Seite lackiert werden. Um eine Lackierung der gesamten Felge vornehmen zu können, ist es also erforderlich, die Felge zunächst in einem ersten Arbeitsschritt beispielsweise auf der Innenseite zu lackieren und in einem zweiten Arbeitsschritt die Felge beispielsweise auf der Außenseite zu lackieren. Nachteilig hierbei ist, dass die Felge zwischen den Arbeitsschritten gewendet werden muss, und der Arbeitsprozess unterbrochen wird. An den Kontaktstellen kann das Wenden weiterhin Spuren auf der aufgetragenen Lackierung hinterlassen, die in einem zusätzlichen Arbeitsschritt nachbearbeitet werden müssen.

Ein weiterer Nachteil ist also, dass eine Felge nicht unter ergonomischen Gesichtspunkten in einem Arbeitsprozess lackiert werden kann. Dadurch ist das Lackieren zeitaufwendig, da nicht durchgängig lackiert werden kann und Nachbearbeitungsarbeiten anfallen. Hierdurch steigen die Kosten für die Lackierung einer Felge.

Der Erfindung liegt in Anbetracht dieses Standes der Technik die Aufgabe zugrunde, eine verbesserte Vorrichtung zum Bearbeiten der Oberfläche einer Felge zu schaffen, insbesondere zum Lackieren, welche es ermöglicht, die Felge in einem durchgängigen Arbeitsschritt zu bearbeiten. Weiterhin soll eine Vorrichtung geschaffen werden, die einen sicheren Halt einer Felge gewährleistet, so dass es nicht zu Materialschäden, beispielsweise verursacht durch Stürze oder dergleichen, an der Felge kommen kann. Eine weitere Aufgabe der Erfindung besteht darin, den Lackiervorgang einer Felge möglichst zeiteffizient und ergonomisch zu gestalten und damit die Kosten für eine Felgenlackierung insbesondere durch die Reduzierung der notwendigen Nachbearbeitung zu verringern.

Zur technischen Lösung wird mit der Erfindung eine Haltevorrichtung für wenigstens einen felgenartigen Körper zur Oberflächenbearbeitung des wenigstens einen felgenartigen Körpers, insbesondere zum Lackieren mittels einer Sprühvorrichtung, gemäß Anspruch 1 vorgeschlagen. Dabei liegt der Erfindung die Erkenntnis zugrunde, dass die Bearbeitung eines felgenartigen Körpers, insbesondere einer Felge, von allen Seiten durchführbar sein soll, ohne den felgenartigen Körper auf der Halterung neu positionieren und den Arbeitsprozess unterbrechen zu müssen. Weiterhin soll eine Bearbeitung unter ergonomischen Gesichtspunkten des Lackierers durchgeführt werden können. Hierdurch sind etwa sogenannte Läufer und/oder Überschichtungen bei der Applikation der Farbe bei der Lackierung, sowie Farbnebel und damit verbundene Staubeinschlüsse weitestgehend vermeidbar. Dies verringert den Materialaufwand als auch die für die Lackierung des felgenartigen Körpers benötigte Arbeitszeit. Weiterhin wird die Ergonomie des Lackiervorgangs verbessert. Dies ist insbesondere bei Sonderlackierungen, beispielsweise mehrfarbigen Lackierungen oder Lackierungen mit Zierstreifen von Bedeutung, da der felgenartige Körper mit der erfindungsgemäßen Haltevorrichtung in einem durchgängigen Arbeitsprozess beispielsweise abgeklebt und mit unterschiedlichen Farbtönen und/oder Materialien lackiert werden kann. Für die Lackierung erforderliche Vor- und Nacharbeiten wie beispielsweise Spachteln, Schleifen und Polieren der Felge können weiterhin in demselben Arbeitsprozess ohne Unterbrechung und dem aus dem Stand der Technik bekannten erneuten Positionieren der Felge durchgeführt werden.

Eine weitere Erkenntnis der Erfindung ist, dass durch eine zweiachsige und ausbalancierte Ausgestaltung der Vorrichtung eine sichere Bearbeitung insbesondere auch großer Felgen durchgeführt werden kann. Weiterhin wird eine verbesserte Luftzirkulation des felgenartigen Körpers gegenüber herkömmlichen Vorrichtungen erzielt. Durch die Möglichkeit, den felgenartigen Körper in Rotation versetzen zu können, kann etwa die Ablüftzeit verringert werden. Weiterhin können sogenannte Läufer, die bei der Lackierung entstehen können, durch gezielte Rotation der Felge durch den Lackierer ausgeglichen werden.

Eine Ausgestaltung der Erfindung ist dadurch gekennzeichnet, dass sich die Richtung der Drehachse des Tragelements von der Richtung der Drehachse des Halteelements unterscheidet. Eine bevorzugte Ausgestaltung der Erfindung sieht vor, dass die Drehachse des Tragelements orthogonal zu der Drehachse des Halteelements ist. Die Erfindung macht sich den Vorteil zunutze, dass ein felgenartiger Körper durch die Verwendung insbesondere zweier orthogonal zueinander stehender Drehachsen von allen Seiten einem Lackierer zugänglich ist. Insbesondere bei der Lackierung einer Felge erfolgt hieraus eine sehr ergonomische Bearbeitbarkeit, da ein ausführender Lackierer seine Position nicht verändern muss. Weiterhin kann die Vorrichtung durch die gezielte Ausrichtung der beiden Drehachsen zueinander zu einer ausbalancierten Halterung des felgenartigen Körpers führen. Dies erlaubt die stabile Bearbeitung insbesondere von großen Felgen. Ferner entfällt das Umpositionieren der Felge, um die Bearbeitung von allen Seiten durchführen zu können. Damit entstehen keine Kontaktstellen, an welchen Spuren zurückbleiben können und die für ein gelungenes Ergebnis nachbearbeitet werden müssten.

Eine weitere Ausgestaltung der Erfindung sieht vor, dass das wenigstens eine Tragelement an dem Standgestell arretierbar ist. Dies ermöglicht eine Fixierung des an dem wenigstens einem Tragelement befestigten felgenartigen Körpers an einer Position innerhalb der Drehachse des Tragelements. Dies kann für bestimmte Arbeitsschritte erforderlich sein. Ferner kann die Arretierung in einer weiteren vorteilhaften Ausgestaltung durch einen externen Mechanismus betätigt werden, beispielsweise durch ein mittels des Fußes des Lackierers betätigbares Betätigungselementes für die Arretierung, welches vorzugsweise im Bereich des Bodens angeordnet ist. Hierzu kann an der Drehachse des wenigstens einen Tragelements ein Zahnrad angeordnet sein, welches in ein Schloss einrastbar ist. Das Schloss kann durch das am Boden stehende Betätigungselement freigeben werden, so dass die Arretierung des wenigstens einen Tragelements lösbar ist und folglich eine Arretierbarkeit erzielt wird. Insbesondere die Ergonomie der Bearbeitung der Oberfläche des felgenartigen Körpers wird hiermit verbessert.

Eine besonders bevorzugte Ausgestaltung der Erfindung ist dadurch gekennzeichnet, dass das wenigstens eine Tragelement im Wesentlichen U-förmig ausgebildet ist, wobei die U-Form zwei freie Schenkel und einen Verbindungsschenkel aufweist. Diese Ausgestaltung des Tragelements führt dazu, dass ein zu bearbeitender felgenartiger Körper nahezu in seinem Schwerpunkt an der Haltervorrichtung fixierbar ist. Die Verdrehung des an der Haltevorrichtung befestigten felgenartigen Körpers wird hierdurch besonders erleichtert, da von einem Lackierer nur ein minimaler Kraftaufwand getätigt werden muss. An einem freien Schenkel des U-förmig ausgebildeten Tragelements befindet sich das Drehlager, welches eine Dreh- bzw. Verschwenkbarkeit des Tragelements an dem Standgestell gewährleistet und an dem anderen freien Schenkel befindet sich das Drehlager des Halteelements.

Eine Ausgestaltung der Erfindung sieht vor, dass die Längen der Schenkel des wenigstens einen im Wesentlichen U-förmig ausgebildeten Tragelements an die Größe des wenigstens einen felgenartigen Körpers angepasst sind. Dabei werden die freien Schenkel vorzugsweise an die Einpresstiefe eines zu bearbeitenden felgenartigen Körpers angepasst und der Verbindungsschenkel an den Radius bzw. Durchmesser des felgenartigen Körpers angepasst. Somit kann gewährleistet werden, dass auch insbesondere große felgenartige Körper an der Haltevorrichtung befestigbar sind.

Eine weitere Ausgestaltung der Erfindung sieht vor, dass die freien Schenkel des wenigstens einen im Wesentlichen U-förmig ausgebildeten Tragelements eine Länge von etwa 20 cm bis etwa 80 cm, vorzugsweise von etwa 35 cm bis etwa 65 cm, besonders bevorzugt von etwa 45 cm bis etwa 55 cm aufweisen. Dies gewährleistet, dass die am Markt erhältlichen und gängigen Felgen an der erfindungsgemäßen Haltevorrichtung bearbeitet werden können, insbesondere Felgen mit unterschiedlichen Einpresstiefen.

Eine erfindungsgemäße Ausgestaltung sieht vor, dass der Verbindungsschenkel des wenigstens einen im Wesentlichen U-förmig ausgebildeten Tragelements eine Länge von etwa 20 cm bis etwa 70 cm, vorzugsweise von etwa 30 cm bis etwa 60 cm, besonders bevorzugt von etwa 40 cm bis etwa 50 cm aufweist. Somit können mit der erfindungsgemäßen Haltevorrichtung alle am Markt erhältlichen und gängigen Felgen bearbeitet werden, insbesondere Felgen mit Durchmessern bis etwa 26 Zoll. Diese sind aufgrund der Größenverhältnisse des im Wesentlichen U-förmig ausgebildeten Tragelements an der Haltevorrichtung befestigbar. Weiterhin kann eine Anpassung der Größenverhältnisse der Haltevorrichtung erfolgen, um noch größere Felgen, beispielsweise LKW-Felgen, bearbeiten zu können.

Eine Ausgestaltung der Erfindung ist dadurch gekennzeichnet, dass das wenigstens eine Halteelement an dem wenigstens einen Tragelement arretierbar ist. Hierdurch kann ein felgenartiger Körper in jeder Position innerhalb der Drehachse des Halteelements fixiert werden. Insbesondere für Individuallackierungen kann dies nützlich sein, da sich ein Lackierer ohne sich neu positionieren zu müssen auf einen bestimmten Bereich des felgenartigen Körpers konzentrieren und diesen entsprechend bearbeiten kann.

Eine bevorzugte Ausgestaltung der Erfindung sieht vor, dass das wenigstens eine Halteelement flanschartig ausgebildet und der wenigstens eine felgenartige Körper mittels wenigstens eines Befestigungsmittels befestigbar ist, vorzugsweise an dem freien Schenkel des im Wesentlichen U-förmig ausgebildeten Tragelements, an welchem das wenigstens eine flanschartig ausgebildete Halteelement drehbar oder verschwenkbar gelagert ist. Im Gegensatz zu den aus dem Stand der Technik bekannten Lösungen, bei welchen eine Fixierung eines zu bearbeitenden felgenartigen Körpers nicht vorgesehen ist, kann hiermit ein stabiler Halt eines felgenartigen Körpers an der erfindungsgemäßen Haltevorrichtung gewährleistet werden. Dabei kann der Flansch vorzugsweise rund ausgebildet sein und an unterschiedlichen Positionen mehrere, vorzugsweise vier oder fünf Bohrungen für Befestigungsmittel aufweisen. Dies ermöglicht es, insbesondere Felgen mit verschiedenen Lochkreisen, beispielsweise mit drei, vier oder fünf Bohrungen im Lochkreis, fest mit dem Flansch mittels eines Befestigungselements zu verbinden. Bei dem Befestigungsmittel handelt es sich vorzugsweise um eine Radschraube. Bei der Bearbeitung eines felgenartigen Körpers kann es ausreichen, den felgenartigen Körper mit einer Minimalanzahl an Befestigungsmitteln an dem Halteelement der Haltevorrichtung zu fixieren, um einen stabilen und sicheren Halt des felgenartigen Körpers zu gewährleisten. Eine weitere vorteilhafte Ausgestaltung der Erfindung sieht als Befestigungsmittel für die Befestigung der Felge am Halteelement eine Konusschraube mit Innensechskant, sogenanntem Inbus, oder dergleichen vor, insbesondere da diese aufgrund des konusförmig ausgebildeten Schraubenkopfes eine einfachere und schnellere Befestigung ermöglicht, die durch Verwendung eines Innensechskant oder dergleichen unterstützt wird.

Eine weitere Ausgestaltung sieht vor, dass der Durchmesser des flanschartig ausgebildeten Halteelements etwa 5 cm bis etwa 20 cm, vorzugsweise von etwa 7 cm bis etwa 17 cm, besonders bevorzugt von etwa 11 cm bis etwa 14 cm beträgt. Hierdurch wird sichergestellt, dass kein Material auf die Kontaktfläche, welche zwischen einer Radnabe an einem Auto und dem felgenartigen Körper besteht, aufgetragen wird. Dies ist insbesondere deswegen zu vermeiden, da durch die Applikation von Farbe an dieser Stelle Unebenheiten entstehen können und in der Folge eine Felge unzureichend an der Radaufhängung eines Autos befestigt werden kann. Durch die durch die Fahrt des Autos entstehende starke Rotation der Felge kann eine Unwucht entstehen oder die Felge kann sich lösen. Durch einen hinreichend großen Durchmesser des Flansches wird gewährleistet, dass es zu einer Applikation von Farbe an dieser Stelle nicht kommen kann und somit die beschriebenen Nachteile durch die erfindungsgemäße Haltevorrichtung konstruktionsbedingt vermieden werden.

Eine weitere bevorzugte Ausgestaltung der Erfindung ist dadurch gekennzeichnet, dass das Standgestell im Wesentlichen aus trapezförmig angeordneten Elementen besteht. Dabei können die einzelnen Elemente der Haltevorrichtung vorzugsweise aus Rohren bestehen und untereinander verschweißt sein. Dabei können Rohre mit kreisförmigem Querschnitt, Rohre mit quadratischem Querschnitt als auch Kombinationen derselben verwendet werden. Vorteilhafterweise weisen dabei zumindest die Rohre für die Drehachse des Tragelements und die Rohre für die Drehachse des Halteelements einen kreisförmigen Querschnitt auf. Die trapezförmige Ausgestaltung des Standgestells stellt zum einen sicher, dass die Haltevorrichtung einen sicheren Stand aufweist, zum anderen erleichtert dies die Ergonomie der Bearbeitung der Oberflächen von felgenartigen Körpern. Der Hintergrund hierbei ist, dass die Bearbeitung, insbesondere die Lackierung, mittels einer Sprühvorrichtung beispielsweise eines Sprühwerkzeugs erfolgt. Die Zufuhr von zu applizierendem Material in die Sprühvorrichtung beispielsweise das Sprühwerkzeug erfolgt über einen mit der Sprühvorrichtung verbundenen Schlauch. Die trapezförmige Ausgestaltung des Standgestells stellt sicher, dass sich der Schlauch nicht an dem Standgestell verhaken kann und somit ein Lackierer bei der Bearbeitung von Oberflächen von felgenartigen Körpern in seinem Arbeitsprozess nicht unterbrochen wird. Weiterhin können somit beispielsweise Läufer oder Farbnebel und damit verbundene Staubeinschlüsse vermieden werden, da keine Applikationen von Material unbeabsichtigter Weise an dafür nicht vorgesehenen Stellen erfolgen kann.

Eine Ausgestaltung der Erfindung ist dadurch gekennzeichnet, dass das im Wesentlichen aus trapezförmig angeordneten Elementen bestehende Standgestell eine vertikal ausgerichtete Grundseite, vorzugsweise ein vom Boden beabstandetes Rohr, aufweist, wobei die Grundseite eine Aufnahme für das wenigstens eine Tragelement aufweist. Dabei kann beispielsweise ein freier Schenkel des U-förmig ausgebildeten Tragelements ein an seinem Ende um 90° gegenüber dem anderen freien Schenkel rotiertes Rohr aufweisen, welches in die Aufnahme an der Grundseite des Standgestells eingreift. Bei Verwendung von Rohren mit einem kreisförmigen Querschnitt für das Tragelement, weist die Grundseite des Standgestells der erfindungsgemäßen Haltevorrichtung vorteilhafterweise ebenfalls ein Rohr mit einem kreisförmigen Querschnitt auf. Ein sicherer Halt des U-förmig ausgebildeten Tragelements wird beispielsweise durch eine Arretierung gewährleistet. Die Arretierung ist dabei an der Grundseite des Standgestells angeordnet und ermöglicht die Fixierung eines U-förmig ausgebildeten Tragelements. Das U-förmig ausgebildete Tragelement lässt sich dementsprechend mit oder ohne an dem Tragelement montierter Felge schnell und einfach montieren bzw. demontieren. Ein Vorteil hiervon ist, dass unterschiedlich zu bearbeitende Felgen schnell an das Standgestell montiert bzw. demontiert werden können. Insbesondere gegenüber dem Fixieren der Felge mittels beispielsweise einer Schraube an dem Halteelement können Zeitersparnisse erzielt werden. Ferner kann der Kontakt mit einem Werkstück an der zu bearbeitenden Oberfläche der Felge vermieden werden, was beispielsweise bei dem Lösen einer Schraube, mit welcher eine zu bearbeitende Felge an dem Halteelement fixiert ist, auftreten kann.

Werden zwei Arretierungen, welche jeweils an der Grundseite des Standgestells angeordnet sind, verwendet, so können bei der Anbringung von zwei U-förmig ausgebildeten Tragelementen diese unabhängig voneinander rotiert und demontiert bzw. montiert werden. Der Vorteil der unabhängigen Drehbarkeit bei der Verwendung von zwei an dem Standgestell angeordneten U-förmig ausgebildeten Tragelementen besteht vor allem in der Vermeidung von Sprühnebel an einer bis dato nicht lackierten, aber bereits an der Vorrichtung montierten Felge. Weiterhin sorgt das erfindungsgemäße Standgestell für einen stabilen und sicheren Stand, so dass eine weitestgehend behinderungsfreie Bearbeitung wenigstens eines felgenartigen Körpers durch einen Lackierer erfolgen kann. Weiterhin können beispielsweise Sturzschäden an der Felge durch den sicheren Stand der erfindungsgemäßen Vorrichtung vermieden werden.

Eine weitere Ausgestaltung der Erfindung sieht vor, dass an der Grundseite des im Wesentlichen aus trapezförmig angeordneten Elementen bestehenden Standgestells zwei Schrägachsen bzw. -seiten, vorzugsweise als Beine des Standgestells ausgebildete Rohre, angeordnet sind, welche vorzugsweise einen Innenwinkel mit der Grundseite von etwa 100° bis 130° bilden. Es sind auch Lösungen denkbar, wobei nur ein Bein oder mehr als zwei Beine als Standgestell für eine erfindungsgemäße Haltevorrichtung verwendet werden. Es hat sich allerdings herausgestellt, dass insbesondere eine trapezförmige Ausgestaltung des Standgestells eine hohe Stabilität gewährleistet und ergonomische Vorteile bei der Bearbeitung von felgenartigen Körpern bietet.

Eine weitere Ausgestaltung der Erfindung ist dadurch gekennzeichnet, dass an den Schrägachsen des im Wesentlichen aus trapezförmig angeordneten Elementen bestehenden Standgestells Standfüße, vorzugsweise Rohre, angeordnet sind, wobei dessen Enden vorzugsweise unter einem Winkel von etwa 15° bis etwa 75° abgeschrägt sind. Die Enden sind insbesondere zur Vermeidung von Verletzungen des Lackierers an ihren Enden abgeschrägt. Weiterhin sollten die Standfüße eine ausreichende Länge besitzen und vorteilhafterweise orthogonal zu der Ausrichtung der Grundseite des im Wesentlichen trapezförmig ausgebildeten Standgestells angeordnet sein. Dies unterstützt einen stabilen und sicheren Stand der Haltevorrichtung. Der stabile und sichere Stand ist insbesondere dann wichtig, wenn Lasten - auch mehrere Lasten und/oder Lasten unterschiedlichen Gewichts - an dem Standgestell angeordnet sind. Dabei können die unterschiedlichen Lasten beispielsweise aus unterschiedlichen Größen von felgenartigen Körpern bestehen. Weiterhin kann an wenigstens einem Standfuß wenigstens eine Rolle, vorzugsweise eine klappbare und/oder wegklappbare und/oder ansteckbare Rolle, angeordnet sein, um eine leichte Bewegbarkeit der Haltevorrichtung gewährleisten zu können. Eine weitere vorteilhafte Ausgestaltung der Erfindung sieht einen vorteilhafterweise lösbaren Transportgriff vor, welcher an einer der Schrägachsen bzw. -seiten des Standgestells befestigbar ist, vorzugsweise mittels einer Schraube oder einem Schnellverschluss mittels Rastelementen oder dergleichen eine schnelle Montage bzw. Demontage des Transportgriffes ermöglichenden Befestigungsmittels.

Jegliche Elemente des Standgestells, insbesondere die Grundseite, die Schrägachsen und die Standfüße, sowie das wenigstens eine Tragelement, insbesondere die freien Schenkel und der Verbindungsschenkel des Tragelements, können bei der erfindungsgemäßen Lösung aus Teleskop- und/oder Rastelementen bestehen, um eine vielfältige Verstellbarkeit der erfindungsgemäßen Haltevorrichtung ermöglichen zu können. Somit kann die Haltevorrichtung an unterschiedlichste Anwendungsfälle, beispielsweise unterschiedlichen Arbeitshöhen und/oder unterschiedlichen Felgengrößen angepasst werden.

Weitere Einzelheiten, Merkmale und Vorteile der Erfindung werden nachfolgend anhand der in den Figuren der Zeichnung dargestellten Ausführungsbeispiele näher erläutert. Dabei zeigen:
- Fig. 1: eine schematische Darstellung einer erfindungsgemäßen Haltevorrichtung in einer leicht perspektivischen Vorderansicht;
- Fig. 2: eine schematische Darstellung einer erfindungsgemäßen Haltevorrichtung in einer perspektivischen Schrägansicht mit einer an einem Halteelement der Haltevorrichtung befestigten Felge;
- Fig. 3: eine schematische Detaildarstellung eines Halteelements einer erfindungsgemäßen Haltevorrichtung in einer Vorderansicht;
- Fig. 4: eine schematische Darstellung einer weiteren erfindungsgemäßen Haltevorrichtung in einer perspektivischen Schrägansicht; und
- Fig. 5: in einer schematischen Darstellung die ein Tragelement und ein Haltelement der Haltevorrichtung nach Fig. 4 ausbildenden Elemente.

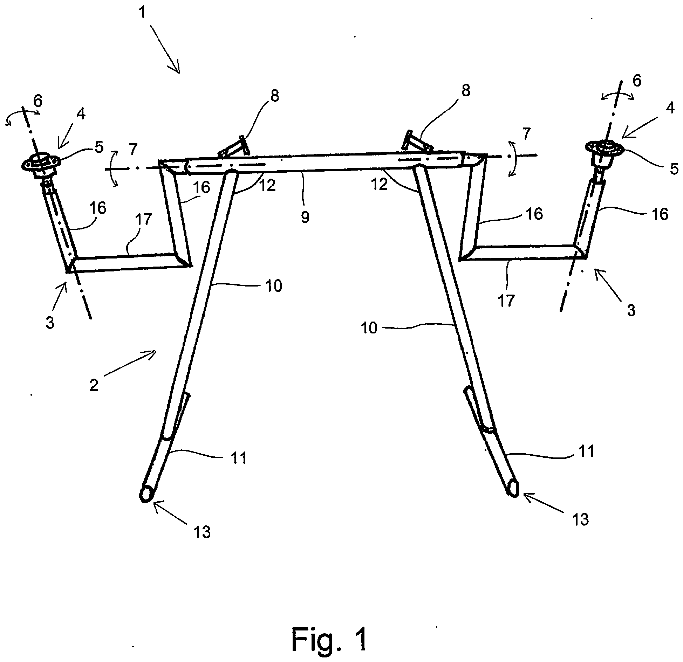

Fig. 1 zeigt eine Haltevorrichtung zur Oberflächenbearbeitung, insbesondere zum Lackieren mittels einer Sprühvorrichtung bzw. eines Sprühwerkzeugs, für zwei felgenartige Körper, insbesondere zwei Felgen. Die Haltevorrichtung 1 weist ein trapezförmiges Standgestell 2 und zwei U-förmig ausgebildete Tragelemente 3 auf, welche am Standgestell 2 drehbar oder verschwenkbar gelagert sind. Die zwei Tragelemente 3 weisen an einem ihrer freien Schenkel jeweils ein Halteelement 4 auf. Die zwei Halteelemente 4 sind jeweils flanschartig ausgebildet und sind mit versetzten Bohrungen 5 versehen, so dass jeweils ein felgenartiger Körper, insbesondere eine Felge, mittels wenigstens eines Befestigungsmittels 15 an dem flanschartig ausgebildeten Halteelement 4 befestigbar ist. Das Befestigungsmittel 15 kann beispielsweise eine Radschraube sein. Das Halteelement 4 ist um eine Drehachse 6 um 360° drehbar gelagert. Dies ist exemplarisch durch den Doppelpfeil an der Drehachse 6 dargestellt.

Die zwei U-förmig ausgebildeten Tragelemente 3 der Haltevorrichtung 1 weisen jeweils zwei freie Schenkel 16 auf, deren Länge ausgebildet ist gängige Einpresstiefen von am Markt erhältlichen Felgen an den Halteelementen 4 der Haltevorrichtung 1 befestigen zu können. Die freien Schenkel 16 des jeweiligen Tragelements 3 verlaufen bzw. erstrecken sich dabei im Wesentlichen parallel zueinander. Das Tragelement 3 weist ferner einen Verbindungsschenkel 17 auf, welcher eine geeignete Länge besitzt, um am Markt erhältliche Felgen mit einem vorgegebenen Radius bzw. Durchmesser aufnehmen zu können. Der Verbindungsschenkel 17 des Tragelements 3 verläuft bzw. erstreckt sich dabei im Wesentlichen senkrecht zu den beiden freien Schenkeln 16 des Tragelements. Das Tragelement 3 ist um eine Drehachse 7 um 360° drehbar gelagert. Dies ist exemplarisch durch den an der Drehachse 7 dargestellten Doppelpfeil veranschaulicht. Die Drehachse 7 ist dabei orthogonal zur Drehachse 6.

Die Tragelemente 3 sind jeweils mittels einer Arretierung 8 fixierbar, um die Tragelemente 3 in verschiedenen Rotationswinkeln um die Drehachse 7 herum fixieren zu können. Dabei sind die Tragelemente 3 unabhängig voneinander drehbar und dementsprechend auch montier- bzw. demontierbar.

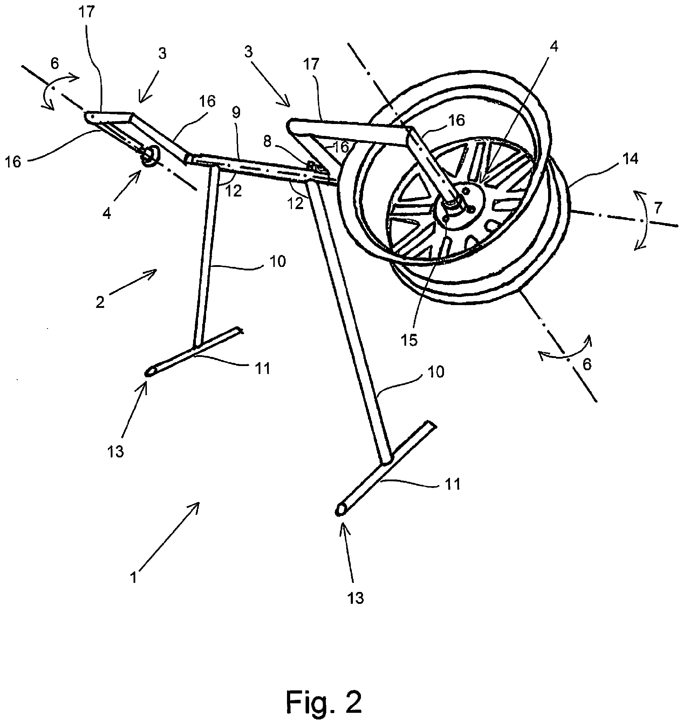

Durch die Verwendung zweier unterschiedlicher Drehachsen 6 und 7 ist es möglich, beispielsweise eine Felge 14 aus Fig. 2, in unterschiedlichsten Positionen an der Haltevorrichtung 1 anzuordnen. Dies ermöglicht es einem Lackierer in einem durchgängigen Arbeitsschritt die Bearbeitung der Oberfläche einer Felge 14 durchzuführen ohne die Position verändern zu müssen. Weiterhin kann ein Lackierer eine Felge 14 in einem durchgängigen Arbeitsprozess bearbeiten, da eine Felge 14 mit der erfindungsgemäßen Haltevorrichtung 1 neu positioniert werden kann, ohne die Felge 14 in einem zusätzlichen Arbeitsschritt wie bisher aus dem Stand der Technik bekannt, von der Aufnahme zu entfernen und erneut in veränderter Position an die Aufnahme anbringen zu müssen.

Die Haltevorrichtung 1 weist ein Standgestell 2 auf. Das Standgestell 2 weist eine Grundseite 9 auf und ist ein etwa 120 cm vom Boden beabstandetes Rohr. An der Grundseite 9 des Standgestells 2 sind zwei Schrägachsen bzw. -seiten 10 angeschweißt, welche als Beine des Standgestells 2 dienen. An jeder Schrägachse bzw. -seite 10 ist jeweils ein Standfuß 11 angeordnet, der aus einem Rohr besteht, welches sich orthogonal zu der Grundseite 9 und einer vertikal zu der Grundseite 9 verlaufenden imaginären Achse bzw. Seite verläuft bzw. erstreckt. Das Standgestell 2 ist trapezförmig durch die Grundseite 9 und die zwei Schrägachsen bzw. -seiten 10 ausgebildet. Die zwei Schrägachsen 10 sind unter einem Innenwinkel α (gekennzeichnet mit dem Bezugszeichen 12) von etwa 110° gegenüber der Grundseite 9 angeordnet. Die Grundseite 9 ist zur Aufnahme zweier U-förmig ausgebildeter Tragelemente 3 ausgebildet. Die zwei U-förmig ausgebildeten Tragelemente 3 weisen jeweils an dem dem Standgestell 2 zugeordneten freien Schenkel 16 ein Rohr auf, welches gegenüber dem freien Schenkel 16 um 90° verdreht bzw. versetzt ist. Dieses Rohr greift durch die Aufnahme an der Grundseite 9, also das Rohr der Grundseite 9 des Standgestells 2, hindurch bzw. in dieses Rohr der Grundseite 9 des Standgestells 2 ein und bildet dabei vorliegend das Lager der Drehachse 7.

Die zwei Standfüße 11 sind in Gestalt zweier horizontal verschweißter Stahlrohre gleichen Durchmessers insbesondere zur Vermeidung von Verletzungen an ihren Enden abgeschrägt. Diese Abschrägung 13 der Standfüße 11 ist in Fig. 1 durch das Bezugszeichen 13 gekennzeichnet. Durch die trapezförmige Konstruktion des Standgestells 2 ist sichergestellt, dass sowohl eine als auch zwei Felgen 14 mit gleichen oder unterschiedlichen Abmaßen von der Haltevorrichtung 1 standsicher gehalten und bearbeitet werden können. Das Standgestell 2 ist zudem durch die Verwendung von Rohren als Material für die einzelnen Elemente leicht genug, um durch eine Person bewegt werden zu können. Weiterhin können die Standfüße 13 mit Rollen versehen werden, um eine noch leichtere Bewegbarkeit der Haltevorrichtung 1 ermöglichen zu können.

In Fig. 2 ist eine erfindungsgemäße Haltevorrichtung 1 mit einer an dem vom Betrachter aus rechtsgelegenem Halteelement 4 befestigten Felge 14 dargestellt. Um die Felge 14 an dem Halteelement 4 befestigen zu können, wird ein Befestigungsmittel 15, insbesondere eine Radschraube verwendet. Wie ferner anhand von Fig. 2 zu erkennen ist, sind die U-förmig ausgebildeten Tragelemente 3 gegenüber der in Fig. 1 dargestellten Ausrichtung der Tragelemente 3 um die Drehachse 7 der Haltevorrichtung 1 verdreht bzw. verschwenkt dargestellt. Abweichend von dem Ausführungsbeispiel in Fig. 1 umfasst die vorliegende Haltevorrichtung 1 gemäß dem Ausführungsbeispiel nach Fig. 2 nur eine Arretierung 8, welche die beiden Tragelemente 3 gleichzeitig fixiert. Die zwei Tragelemente 3 umfassen eine gemeinsame Drehachse 7, so dass die Verdrehung eines Tragelements 3 die Verdrehung des anderen Tragelements 3 mit herbeiführt bzw. bewirkt. Ferner ist zu erkennen, dass die freien Schenkel 16 des U-förmig ausgebildeten Tragelements 3 eine geeignete Länge aufweisen, um die Felge 14 mit gegebener Einpresstiefe aufnehmen zu können. Weiterhin weist der Verbindungsschenkel 17 des U-förmig ausgebildeten Tragelements eine derartige Länge auf, um die Felge mit gegebenen Radius bzw. Durchmesser aufnehmen zu können. Obwohl in dem dargestellten Ausführungsbeispiel nur an einem der zwei Halteelemente 4 eine Felge 14 befestigt ist, weist die Haltevorrichtung 1 einen stabilen und sicheren Stand auf, insbesondere aufgrund der trapezförmigen Ausgestaltung des Standgestells 2 und der darauf abgestimmten Geometrie der Tragelemente 3 bzw. Halteelemente 4.

Durch die Konstruktion der Haltevorrichtung 1 ist die Felge 14 von allen Seiten zugänglich, ohne sie abnehmen zu müssen oder die Position des ausführenden Lackierers verändern zu müssen und unabhängig von der Einpresstiefe und Breite der Felge 14. Damit ist die Felge 14 einfacher lackierbar. Es können exakte Ergebnisse erzielt werden und etwaige sogenannte Läufer und Überschichtungen bei der Applikation von Farbe, sowie Farbnebel und damit verbundene Staubeinflüsse, können weitestgehend vermieden werden. Dies spart sowohl Farbe als auch Arbeitszeit ein und verbessert entschieden die Ergonomie des Lackiervorgangs. Dies ist insbesondere bei Sonderlackierungen, wie beispielsweise mehrfarbigen Lackierungen oder der Lackierung von Zierstreifen wichtig, da die Felge 14 in einem durchgängigem Arbeitsprozess beispielsweise abgeklebt und mit unterschiedlichen Farbtönen und/oder Materialien lackiert werden kann. Für die Bearbeitung der Oberfläche der Felge 14 erforderliche Vor- und Nacharbeiten wie beispielsweise Spachteln, Schleifen und/oder Polieren der Felge 14, können weiterhin in demselben durchgängigen Arbeitsprozess ohne Demontage der Felge 14 durchgeführt werden. Durch die Verwendung von zwei Drehachsen 6 und 7 und eine gegebene Ausbalancierung der Felge 14, die dadurch erreicht wird, dass die zu bearbeitende Felge 14 im Wesentlichen mit ihrem Schwerpunkt innerhalb des Schnittpunkts der beiden Drehachsen 6 und 7 befestigbar ist, und dem trapezförmig ausgebildeten Standgestell 2, kann eine hervorragende Bearbeitungsfähigkeit insbesondere auch großer Felgen erzielt werden. Durch die zweiachsige Drehbarkeit der Haltevorrichtung 1 kann weiterhin eine verbesserte Luftzirkulation an der Oberfläche der zu bearbeitenden Felge 14 erzielt werden. In der dargestellten Ausgestaltung der Haltevorrichtung 1 ist es möglich zwei Felgen 14 gleichzeitig zu bearbeiten. Dabei kann eine erste Felge 14 in einer Position verharren, um sie etwa im Nachgang weiter bearbeiten zu können, während ein ähnlicher, identischer oder unterschiedlicher Arbeitsschritt an der zweiten Felge 14 durchgeführt wird.

Weiterhin ist zu erkennen, dass der Flansch des Haltelements 4 einen Durchmesser besitzt, der in etwa deckungsgleich mit der auf einer Radnabe von einer Radaufhängung von einem Auto aufliegenden Kontaktfläche der Felge 14 ist.

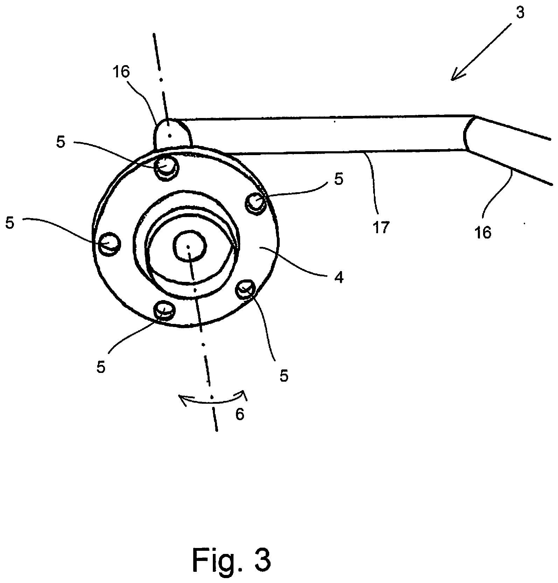

In Fig. 3 ist eine schematische Darstellung eines Halteelements 4, welches einen Flansch aufweist, einer erfindungsgemäßen Haltevorrichtung 1 dargestellt. Das Halteelement 4 weist fünf Bohrungen 5 auf, in welche Befestigungsmittel, insbesondere Radschrauben 15 oder dergleichen, eingreifen können, um einen stabilen und sicheren Halt bei der Befestigung einer Felge 14 gewährleisten zu können. Durch die symmetrische Anordnung der Bohrungen 5 an der Haltevorrichtung 4 ist es möglich, Felgen 14 mit unterschiedlichen Lochkreisen an dem Halteelement 4 befestigen zu können. Das Haltelement 4 weist ein Lager auf, so dass das Halteelement 4 um eine Drehachse 6 um 360° drehbar bzw. verschwenkbar ist. Dies ist exemplarisch durch den Doppelpfeil, welcher an der Drehachse 6 angeordnet ist, dargestellt.

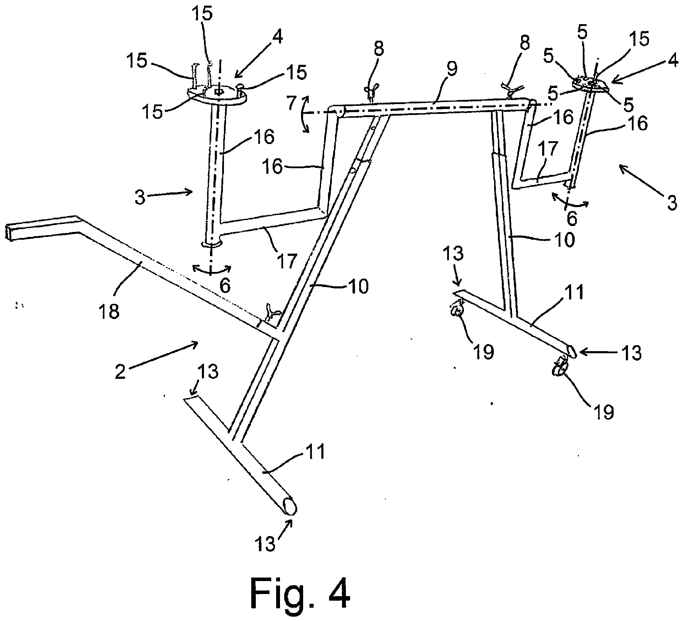

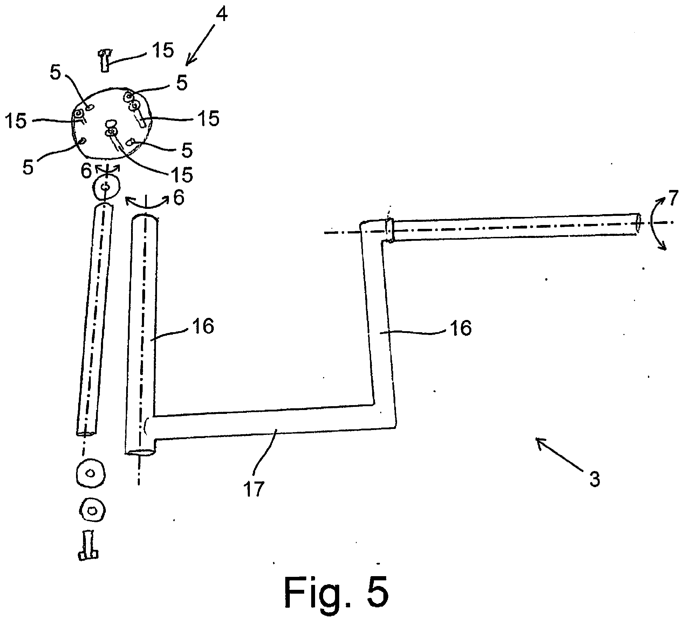

Fig. 4 und Fig. 5 zeigen ein weiteres Ausführungsbeispiel einer Haltevorrichtung 1 für wenigstens einen felgenartigen Körper zur Oberflächenbearbeitung des wenigstens einen felgenartigen Körpers, insbesondere zum Lackieren mittels einer Sprühvorrichtung bzw. eines Sprühwerkzeugs. Die Haltevorrichtung 1 weist ebenfalls ein aus trapezförmig angeordneten Elementen, insbesondere Rohren mit einem kreisförmigen Querschnitt und Rohren mit einem quadratischen Querschnitt ausgebildetes Standgestell 2 mit zwei im Wesentlichen U-förmig ausgebildeten Tragelementen 3 auf, die jeweils um eine Drehachse 7 des Standgestells 2 drehbar oder verschwenkbar an dem Standgestell 2 gelagert sind. Die Tragelemente 3 sind dabei jeweils mittels einer Arretierung 8 vorzugsweise stufenlos an der bzw. bezüglich der Drehachse 7 arretierbar. Die Arretierung 8 erfolgt dabei vorteilhafterweise mittels Schrauben 8, die in das Rohr der Grundseite 9 des Standgestells 2 senkrecht zur Drehachse 7 eingreifen, wozu das Rohr der Grundseite 9 des Standgestells 2 vorzugsweise eine Gewindebohrung aufweist. Die U-förmig ausgebildeten Tragelemente 3 weisen dabei wie die Tragelemente 3 bei den Haltevorrichtungen 1 nach Fig. 1 bis Fig. 3 zwei im Wesentlichen parallel zueinander verlaufende freie Schenkel 16 und einen senkrecht zu diesen verlaufenden Verbindungsschenkel 17 auf. An einem der freien Schenkel 16 der Tragelemente 3 ist jeweils ein Halteelement 4 angeordnet, welches um eine Drehachse 6 drehbar oder verschwenkbar an dem jeweiligen Tragelement 3 gelagert ist und an welchem der wenigstens eine felgenartige Körper mittels Radschrauben bzw. Konusschrauben oder dergleichen Befestigungsmittel 15 befestigbar ist. Die Drehachse 6 steht verläuft dabei im Wesentlichen senkrecht zur Drehachse 7.

Die Tragelemente 3 und die vom Boden beabstandete Grundseite 9 des Standgestells 2 der Haltevorrichtung 1 sind vorliegend aus Rohren mit einem kreisförmigen Querschnitt gefertigt. Gleiches gilt abgesehen von dem Flansch und den Befestigungsmitteln des jeweiligen Haltelements 4 für das Halteelement 4 (vgl. Fig. 5). Die Schrägseiten 10 des Standgestells 2 sind bei der in Fig. 4 und Fig. 5 dargestellten Haltevorrichtung 1 aus Rohren mit einem quadratischen Querschnitt gefertigt, die insbesondere den Stand und die Stabilität der Haltevorrichtung 1 weiter verbessern und leichter verarbeitbar und schweißbar sind. Die Schrägseiten 10 des Standgestells 2 sind dabei vorteilhafterweise aus teleskopierbaren, ineinander steckbaren Rohren gefertigt, die einerseits an dem die Drehachse 7 ausbildenden bzw. bereitstellenden Rohr der Grundseite 9 des Standgestells 2 angeschweißt sind. Durch die Teleskopierbarkeit der Schrägseiten 10 des Standgestells 2 ist die Höhe der Grundseite 9 des Standgestells einstellbar. Ferner können die Schrägseiten 10 des Standgestells so unterschiedlich lang ausgewählt werden, insbesondere zur Höhenanpassung, beispielsweise bei Verwendung von Rollen 19. An das Ende des jeweils anderen Rohrs der Schrägseiten 10 des Standgestells 2 sind wie bei den Ausführungsbeispielen nach Fig. 1 bis Fig. 3 aus Rohren gefertigte Standfüße 11 vorgesehen. Die Rohre der Standfüße weisen vorliegend einen kreisförmigen Querschnitt auf und sind an ihren Enden mit einer Abschrägung 13 versehen. Die in Fig. 4 links dargestellte Schrägseite 10 des Standgestells 2 der Haltevorrichtung 1 ist mit einem Transportgriff 18 versehen, welcher aus Rohren mit einem quadratischen Querschnitt besteht und sich unter einem Winkel im Wesentlichen parallel zur Grundseite 9 des Standgestells 2 verlaufend erstreckt. Der Transportgriff 18 ist mittels einer Schraube oder dergleichen Befestigungsmittel an der in Fig. 4 links dargestellten Schrägseite 10 des Standgestells 2 der Haltevorrichtung 1 lösbar befestigbar. Der Standfuß 11 der in Fig. 4 rechts dargestellten Schrägseite 10 des Standgestells 2 der Haltevorrichtung 1 ist an seinen freien Enden vorliegend mit Rollen 19, vorzugsweise mit arretierbaren Rollen 19, versehen und damit bei Anheben der Haltevorrichtung 1 mittels des Transportgriffs 18 von Hand verfahrbar. Die Rollen 19 sind dabei derart an dem Standfuß 11 angeordnet, dass diese sich nicht über die Abschrägung 13 hinaus erstrecken, um ein Hängenbleiben eines Schlauchs oder ein Stolpern des Lackierers über selbige zu verhindern.

Der gesamte Bearbeitungsprozess eines felgenartigen Körpers kann die folgenden Schritte umfassen:
- befestigen des felgenartigen Körpers 14 an einem Halteelement 4 mittels wenigstens eines Befestigungsmittels 15;
- durchführen etwaiger notwendiger Vorarbeiten, wie beispielsweise das Reinigen und Schleifen der Oberfläche des felgenartigen Körpers 14;
- bearbeiten der Oberfläche des felgenartigen Körpers 14, insbesondere dem Durchführen einer Lackierung der Oberfläche des felgenartigen Körpers 14 mittels einer Sprühvorrichtung bzw. eines Sprühwerkzeugs;
- etwaige notwendige Trocknung der bearbeiteten Oberfläche des felgenartigen Körpers durchführen;
- durchführen etwaiger notwendiger Nacharbeiten, beispielsweise die Entfernung von unbeabsichtigten Materialauftrag an den Bohrungen für die Radmuttern an dem felgenartigen Körper 14, indem mit einem auf die Größe der Standardbohrung angepassten Bohraufsatz in Form einer zylinderförmigen Drahtbürste jegliche Farbreste an dieser für den Halt des felgenartigen Körpers 14 an der Achse eines Fahrzeugs relevanten Stelle mit einem Handgriff schnell und einfach entfernt wird; und
- demontieren des fertig bearbeiteten felgenartigen Körpers 14 von der erfindungsgemäßen Haltevorrichtung 1.

Die in den Figuren der Zeichnung dargestellten Ausführungsbeispiele dienen lediglich der Erläuterung der Erfindung und sind für diese nicht beschränkend.

### Bezugszeichenliste:

- 1: Haltevorrichtung
- 2: Standgestell
- 3: Tragelement
- 4: Halteelement/Flansch
- 5: Bohrung
- 6: Drehachse (Halteelement)
- 7: Drehachse (Tragelement)
- 8: Arretierung
- 9: Grundseite
- 10: Schrägachse
- 11: Standfuß
- 12: Innenwinkel α
- 13: Abschrägung
- 14: Felge
- 15: Befestigungsmittel/Radschraube/Konusschraube
- 16: freier Schenkel
- 17: Verbindungsschenkel
- 18: Transportgriff
- 19: Rolle

## Patentansprüche

1. Haltevorrichtung (1) für wenigstens einen felgenartigen Körper (14) zur Oberflächenbearbeitung des wenigstens einen felgenartigen Körpers (14), insbesondere zum Lackieren mittels einer Sprühvorrichtung, mit
einem Standgestell (2),
wenigstens einem Tragelement (3), und
wenigstens einem Halteelement (4),
**dadurch gekennzeichnet dass**,
das wenigstens eine Tragelement (3) um eine Drehachse (7) drehbar oder verschwenkbar an dem Standgestell (2) gelagert und im Wesentlichen U-förmig ausgebildet ist, wobei die U-Form zwei freie Schenkel (16) und einen Verbindungsschenkel (17) aufweist, und dass
das wenigstens eine Halteelement (4), um eine Drehachse (6) drehbar oder verschwenkbar an dem Tragelement (3) gelagert ist und an welchem der wenigstens eine felgenartige Körper (14) befestigbar ist, so dass die Oberflächenbearbeitung des felgenartigen Körpers (14) von allen Seiten durchführbar ist, ohne den felgenartigen Körper (14) an dem Halteelement (4) neu positionieren zu müssen.

2. Haltevorrichtung (1) nach Anspruch 1, **dadurch gekennzeichnet, dass** die Richtung der Drehachse (7) des Tragelements (3) von der Richtung der Drehachse (6) des Halteelements (4) abweicht.

3. Haltevorrichtung (1) nach Anspruch 1 oder Anspruch 2, **dadurch gekennzeichnet, dass** die Drehachse (7) des Tragelements (3) orthogonal zu der Drehachse (6) des Halteelements (4) ist.

4. Haltevorrichtung (1) nach einem der Ansprüche 1 bis 3, **dadurch gekennzeichnet, dass** das wenigstens eine Tragelement (3) an dem Standgestell (2) arretierbar ist.

5. Haltevorrichtung (1) nach einem der Ansprüche 1 bis 4, **dadurch gekennzeichnet, dass** die Längen der Schenkel (16) des wenigstens einen im Wesentlichen U-förmig ausgebildeten Tragelements (3) an die Größe des wenigstens einen felgenartigen Körpers (14) angepasst sind und/oder anpassbar sind.

6. Haltevorrichtung (1) nach einem der Ansprüche 1 bis 5, **dadurch gekennzeichnet, dass** die freien Schenkel (16) des wenigstens einen im Wesentlichen U-förmig ausgebildeten Tragelements (3) eine Länge von etwa 20 cm bis etwa 80 cm, vorzugsweise von etwa 35 cm bis etwa 65 cm, besonders bevorzugt von etwa 45 cm bis etwa 55 cm aufweisen.

7. Haltevorrichtung (1) nach einem der Ansprüche 1 bis 6, **dadurch gekennzeichnet, dass** der Verbindungsschenkel (17) des wenigstens einen im Wesentlichen U-förmig ausgebildeten Tragelements (3) eine Länge von etwa 20 cm bis etwa 70 cm, vorzugsweise von etwa 30 cm bis etwa 60 cm, besonders bevorzugt von etwa 40 cm bis etwa 50 cm aufweist.

8. Haltevorrichtung (1) nach einem der Ansprüche 1 bis 7, **dadurch gekennzeichnet, dass** das wenigstens eine Halteelement (4) an dem wenigstens einen Tragelement (3) arretierbar ist.

9. Haltevorrichtung (1) nach einem der Ansprüche 1 bis 8, **dadurch gekennzeichnet, dass** das wenigstens eine Halteelement (4) flanschartig ausgebildet ist und der wenigstens eine felgenartige Körper mittels wenigstens eines Befestigungsmittels (15) an dem flanschartig ausgebildeten Halteelement (4) befestigbar ist, vorzugsweise an dem Schenkel (16) des im Wesentlichen U-förmig ausgebildeten Tragelements (3), an welchem das wenigstens eine flanschartig ausgebildete Halteelement (4) drehbar oder verschwenkbar gelagert ist.

10. Haltevorrichtung (1) nach Anspruch 9, **dadurch gekennzeichnet, dass** der Durchmesser des flanschartig ausgebildeten Halteelements (4) von etwa 5 cm bis etwa 20 cm, vorzugsweise von etwa 7 cm bis etwa 17 cm, besonders bevorzugt von etwa 11 cm bis etwa 14 cm beträgt.

11. Haltevorrichtung (1) nach einem der Ansprüchen 1 bis 10, **dadurch gekennzeichnet, dass** das Standgestell (2) im Wesentlichen aus trapezförmig angeordneten Elementen, vorzugsweise Rohren mit kreisförmigem Querschnitt und/oder Rohren mit quadratischem Querschnitt, besteht.

12. Haltevorrichtung (1) nach Anspruch 11, **dadurch gekennzeichnet, dass** das im Wesentlichen aus trapezförmig angeordneten Elementen bestehende Standgestell (2) eine vertikal ausgerichtete Grundseite (9), vorzugsweise ein vom Boden beabstandetes Rohr, aufweist, wobei die Grundseite (9) eine Aufnahme für das wenigstens eine Tragelement (3) aufweist.

13. Haltevorrichtung (1) nach Anspruch 12 **dadurch gekennzeichnet, dass** an der Grundseite (9) des im Wesentlichen aus trapezförmig angeordneten Elementen bestehenden Standgestells (2) zwei Schrägachsen (10), vorzugsweise als Beine des Standgestells (2) ausgebildete Rohre, angeordnet sind, welche vorzugsweise einen Innenwinkel (12) mit der Grundseite (9) von etwa 100° bis 130° bilden.

14. Haltevorrichtung (1) nach Anspruch 13, **dadurch gekennzeichnet, dass** an den Schrägachsen (10) des im Wesentlichen aus trapezförmig angeordneten Elementen bestehenden Standgestells (2) Standfüße (11), vorzugsweise Rohre, angeordnet sind, wobei deren Enden vorzugsweise unter einem Winkel von etwa 15° bis etwa 75° abgeschrägt sind.

## Claims

1. A holding device (1) of at least one rim-like body (14) for the surface treatment of the at least one rim-like body (14), in particular for varnishing by means of a spraying device, comprising
a stand frame (2),
at least one bearing element (3), and
at least one holding element (4),
**characterized in that**
the at least one bearing element (3) is arranged on the stand frame such that it can be rotated or pivoted around a rotation axis (7) and is essentially U-shaped, wherein the U-shape comprises two free legs (15) and a connecting leg (17), and that
the at least one holding element (4) is arranged on the bearing element (3) such that it can be rotated or pivoted around a rotation axis (6) and on which holding element the at least one rim-like body (14) can be fastened, such that the surface treatment of the rim-like body (14) can be carried out from all sides without having to reposition the rim-like body (14) on the holding element (4).

2. A holding device (1) according to claim 1, **characterized in that** the direction of the rotation axis (7) of the bearing element (3) deviates from the direction of the rotation axis (6) of the holding element (4).

3. A holding device (1) according to claim 1 or claim 2, **characterized in that** the rotation axis (7) of the bearing element (3) is orthogonal to the rotation axis (6) of the holding element (4).

4. A holding device (1) according to one of the claims 1 to 3, **characterized in that** the at least one bearing element (3) can be locked on the stand frame (2).

5. A holding device (1) according to one of the claims 1 to 4, **characterized in that** the lengths of the legs (16) of the at least one essentially U-shaped bearing element (3) are adapted and/or can be adapted to the size of the at least one rim-like body (14).

6. A holding device (1) according to one of the claims 1 to 5, **characterized in that** the free legs (16) of the at last one essentially U-shaped bearing element (3) comprise a length comprised between about 20 cm and about 80 cm, preferably between about 35 cm and about 65 cm, most preferably between about 45 cm and about 55 cm.

7. A holding device (1) according to one of the claims 1 to 6, **characterized in that** the connecting leg (17) of the at least one essentially U-shaped bearing element (3) comprises a length comprised between about 20 cm and about 70 cm, preferably between about 30 cm and about 60 cm, most preferably between about 40 cm and about 50 cm.

8. A holding device (1) according to one of the claims 1 to 7, **characterized in that** the at least one holding element (4) can be locked on the at least one bearing element (3).

9. A holding device (1) according to one of the claims 1 to 8, **characterized in that** the at least one holding element (4) is designed like a flange and the at least one rim-like body can be fastened to the holding element (4) designed like a flange by means of at least one fastening means (15), preferably to the leg (16) of the essentially U-shaped bearing element (3), on which the at least one holding element (4) designed like a flange is arranged such that it can be rotated or pivoted.

10. A holding device (1) according to claim 9, **characterized in that** the diameter of the holding element (4) designed like a flange is comprised between about 5 cm and about 20 cm, preferably between about 7 cm and about 17 cm, most preferably between about 11 cm and about 14 cm.

11. A holding device (1) according to one of the claims 1 to 10, **characterized in that** the stand frame (2) essentially consists of elements which are arranged in a trapezoidal manner, preferably tubes having a circular cross section and/or tubes having a square cross section.

12. A holding device (1) according to claim 11, **characterized in that** the stand frame (2) that essentially consists of elements which are arranged in a trapezoidal manner comprises a vertically oriented basic side (9), preferably a tube spaced apart from the ground, wherein the basic side (9) comprises a receiver of the at least one bearing element (3).

13. A holding device (1) according to claim 12, **characterized in that** two inclined axes (10), preferably tubes which are designed as legs of the stand frame (2), are arranged on the basic side (9) of the stand frame (2) that essentially consists of elements which are arranged in a trapezoidal manner, which inclined axes preferably form an inner angle (12) comprised between about 100° and 130° with the basic side (9).

14. A holding device (1) according to claim 13, **characterized in that** supporting feet (11), preferably tubes, are arranged on the inclined axes (10) of the stand frame (2) that essentially consists of elements which are arranged in a trapezoidal manner, wherein the ends of the supporting feet (11) are preferably chamfered with an angle comprised between about 15° and about 75°.

## Revendications

1. Dispositif de retenue (1) d'au moins un corps en forme de jante (14) pour le traitement de surface de l'au moins un corps en forme de jante (14), notamment pour le laquage par moyen d'un dispositif de pulvérisation, comprenant un châssis (2),
au moins un élément de support (3) et
au moins un élément de retenue (4),
**caractérisé en ce que**
l'au moins un élément de support (3) est logé sur le châssis (2) de manière tournant ou pivotant autour d'un axe de rotation (7) et est essentiellement conçu en forme de U, la forme de U comprenant deux branches libres (16) et une branche de liaison (17), et que
l'au moins un élément de retenue (4) est logé sur l'élément de support (3) de manière tournant ou pivotant autour d'un axe de rotation (6), et auquel élément de retenue peut être fixé l'au moins un corps en forme de jante (14), de sorte que le traitement de surface du corps en forme de jante (14) peut être effectué de tous les côtés sans devoir repositionner le corps en forme de jante (14) sur l'élément de retenue (4).

2. Dispositif de retenue (1) selon la revendication 1, **caractérisé en ce que** la direction de l'axe de rotation (7) de l'élément de support (3) diffère de la direction de l'axe de rotation (6) de l'élément de retenue (4).

3. Dispositif de retenue (1) selon la revendication 1 ou la revendication 2, **caractérisé en ce que** l'axe de rotation (7) de l'élément de support (3) est orthogonale à l'axe de rotation (6) de l'élément de retenue (4).

4. Dispositif de retenue (1) selon l'une des revendications 1 à 3, **caractérisé en ce que** l'au moins un élément de support (3) peut être bloqué sur le châssis (2).

5. Dispositif de retenue (1) selon l'une des revendications 1 à 4, **caractérisé en ce que** les longueurs des branches (16) de l'au moins un élément de support (3) essentiellement conçu en forme de U sont adaptées et/ou peuvent être adaptées à la taille de l'au moins un corps en forme de jante (14).

6. Dispositif de retenue (1) selon l'une des revendications 1 à 5, **caractérisé en ce que** les branches libres (16) de l'au moins un élément de support (3) essentiellement conçu en forme de U comprennent une longueur comprise entre environ 20 cm et environ 80 cm, de préférence entre environ 35 cm et environ 65 cm, de préférence particulière entre environ 45 cm et 55 cm.

7. Dispositif de retenue (1) selon l'une des revendications 1 à 5, **caractérisé en ce que** la branche de liaison (17) de l'au moins un élément de support (3) essentiellement conçu en forme de U comprend une longueur comprise entre environ 20 cm et environ 70 cm, de préférence entre environ 30 cm et environ 60 cm, de préférence particulière entre environ 40 cm et environ 50 cm.

8. Dispositif de retenue (1) selon l'une des revendications 1 à 7, **caractérisé en ce que** l'au moins un élément de retenue (4) peut être bloqué sur l'au moins un élément de support (3).

9. Dispositif de retenue (1) selon l'une des revendications 1 à 8, **caractérisé en ce que** l'au moins un élément de retenue (4) est conçu en forme de bride et l'au moins un corps en forme de jante (14) peut être fixé à l'élément de retenue (4) conçu en forme de bride par moyen d'au moins un moyen de fixation (15), de préférence à la branche (16) de l'élément de support (3) essentiellement conçu en forme de U, sur laquelle est logé de manière tournant ou pivotant l'au moins un élément de retenue (4) conçu en forme de bride.

10. Dispositif de retenue (1) selon la revendication 9, **caractérisé en ce que** le diamètre de l'élément de retenue (4) conçu en forme de bride est compris entre environ 5 cm et environ 20 cm, de préférence entre environ 7 cm et environ 17 cm, de préférence particulière entre environ 11 cm et environ 14 cm.

11. Dispositif de retenue (1) selon l'une des revendications 1 à 10, **caractérisé en ce que** le châssis (2) est essentiellement constitué d'éléments disposés de manière trapézoïdale, de préférence de tuyaux ayant une section transversale circulaire et/ou de tuyaux ayant une section transversale carrée.

12. Dispositif de retenue (1) selon la revendication 11, **caractérisé en ce que** le châssis (2) essentiellement constitué d'éléments disposés de manière trapézoïdale comprend un côté de base (9) orienté verticalement, de préférence un tuyau espacé du sol, le côté de base (9) comprenant un logement de l'au moins un élément de support (3).

13. Dispositif de retenue (1) selon la revendication 12, **caractérisé en ce que** deux axes obliques (10), de préférence des tuyaux conçus comme des jambes du châssis (2), sont disposés sur le côté de base (9) du châssis (2) essentiellement constitué d'éléments disposés de manière trapézoïdale, lesquels axes obliques (10) forment de préférence un angle intérieur (12) compris entre environ 100° et 130° avec le côté de base (9).

14. Dispositif de retenue (1) selon la revendication 13, **caractérisé en ce que** des pieds de support (11), de préférence des tuyaux, sont disposés sur les axes obliques (10) du châssis (2) essentiellement constitué d'éléments disposés de manière trapézoïdale, les extrémités des pieds de support (11) étant de préférence chanfreinés sous un angle compris entre environ 15° et environ 75°.
